# EUROPEAN PATENT APPLICATION

(11) **EP 4 418 748 A1**
(43) Date of publication of application: **21.08.2024**
(21) Application number: 22889132.1
(22) Date of filing: 21.10.2022
(51) Int. Cl.: H04W 52/02

(54) **COMMUNICATION METHOD AND COMMUNICATION APPARATUS**

(30) Priority: 04.11.2021 CN 202111301778
(71) Applicant: Huawei Technologies Co., Ltd., Shenzhen, Guangdong 518129 (CN)
(72) Inventor: LIU, Mengting, Shenzhen, Guangdong 518129 (CN); GAO, Xin, Shenzhen, Guangdong 518129 (CN); YU, Zheng, Shenzhen, Guangdong 518129 (CN); CHANG, Junren, Shenzhen, Guangdong 518129 (CN); HAO, Jinping, Shenzhen, Guangdong 518129 (CN)
(74) Representative: Isarpatent
(86) International application number: PCT/CN2022/126814
(87) International publication number: WO 2023/078107

(57) **Abstract**

This application provides a communication method and a communication apparatus, to reduce power consumption of a terminal device, and relates to the field of wireless communication technologies. In the method, a first terminal device is not configured to receive or send at least one of the following: a NAS message, a transmission LPP message, connected mode information, and a paging message. Based on the foregoing solution, a protocol stack function of the terminal device is simplified to support a basic positioning function. Compared with that in a current protocol stack architecture, the protocol stack function is simplified. In this way, a code amount and data of a corresponding function can be effectively reduced, and hardware storage space can be effectively reduced, to reduce a deep sleep current of the terminal device. In addition, complexity and signaling overheads of performing the corresponding function by the terminal device can be effectively reduced, to reduce positioning power consumption of the terminal device.

## Description

### CROSS-REFERENCE TO RELATED APPLICATIONS

This application claims priority to Chinese Patent Application No. 202111301778.2, filed with the China National Intellectual Property Administration on November 4, 2021 and entitled "COMMUNICATION METHOD AND COMMUNICATION APPARATUS", which is incorporated herein by reference in its entirety.

### TECHNICAL FIELD

This application relates to the field of wireless communication technologies, and in particular, to a communication method and a communication apparatus.

### BACKGROUND

A main function of a current 5th generation mobile communication technology (5th generation mobile technology, 5G) terminal is to support communication, for example, data transmission, and a positioning function may be an optional function. To support a complete communication function, the 5G terminal needs to support a complete protocol stack function, including a radio access network (radio access network, RAN) function and a 5G core network (5G core network, 5GC) function. However, for a terminal that has only a positioning requirement, a current protocol stack structure and function are excessively complex, and consequently operation complexity and signaling overheads of the terminal are excessively high, resulting in excessively high positioning power consumption of the terminal.

### SUMMARY

This application provides a communication method and a communication apparatus, to reduce power consumption of a terminal device.

According to a first aspect, a communication method is provided. The method may be performed by a terminal device or a chip. In the method, a first terminal device receives configuration information of at least one reference signal, where the reference signal may be a reference signal used for positioning, or a reference signal used for another purpose; and the first terminal device sends the at least one reference signal based on the configuration information, where the first terminal device is not configured to receive or send at least one of the following: a non-access stratum (non-access stratum, NAS) message, a transmission long term evolution positioning protocol (long term evolution positioning protocol, LPP) message, connected mode information, and a paging message.

Based on the foregoing solution, a protocol stack function of the terminal device is simplified to support a basic positioning function. Compared with that in a current protocol stack architecture, the protocol stack function is simplified. In this way, a code amount and data of a corresponding function can be effectively reduced, and hardware storage space can be effectively reduced, to reduce a deep sleep current of the terminal device. In addition, complexity and signaling overheads of performing the corresponding function by the terminal device can be effectively reduced, to reduce positioning power consumption of the terminal device.

In a possible implementation, the first terminal device does not have at least one of the following: a NAS layer function, an LPP layer function, a function of sending information in a connected mode, a function of receiving information in the connected mode, a packet data convergence protocol (packet data convergence protocol, PDCP) layer function, and a radio link control (radio link control, RLC) layer function.

For example, the first terminal device does not have the LPP layer function. For another example, the first terminal device does not have the LPP layer function and the NAS layer function. For another example, the first terminal device does not have the LPP layer function, the NAS layer function, the function of sending information in a connected mode, and the function of receiving information in the connected mode. For another example, the first terminal device does not have the LPP layer function, the NAS layer function, the function of sending information in a connected mode, the function of receiving information in the connected mode, and the PDCP layer function. For another example, the first terminal device does not have the LPP layer function, the NAS layer function, the function of sending information in a connected mode, the function of receiving information in the connected mode, the PDCP layer function, and the RLC layer function.

Based on the foregoing solution, a protocol stack function of the terminal device is simplified. The terminal device may not have at least one of the NAS layer function, the LPP layer function, the function of sending information in a connected mode, the function of receiving information in the connected mode, the PDCP layer function, and the RLC layer function. This can effectively reduce or remove a code amount and data of a corresponding function, to reduce a deep sleep current of the terminal device, and reduce complexity and signaling overheads of the terminal device, to reduce power consumption of the terminal device.

In a possible implementation, the first terminal device has only at least one of the following: a physical (physical, PHY) layer function, a radio resource control (radio resource control, RRC) layer function, and a medium access control (medium access control, MAC) layer function.

Based on the foregoing solution, the terminal device may have only at least one of the PHY layer function, the RRC layer function, and the MAC layer function, so that a total code amount and a data amount are greatly reduced, to reduce a deep sleep current, device complexity, and signaling overheads of the terminal device, so as to reduce power consumption of the terminal device.

In a possible implementation, the RRC layer function does not include at least one of the following: a paging message receiving function, a function of establishing, maintaining, or releasing an RRC connection to a network, a function of establishing, configuring, maintaining, or releasing a signaling radio bearer, a quality of service (quality of service, QoS) management function, a function of detecting and rectifying a radio link failure, a function of transmitting a NAS message from a NAS layer to the first terminal device, and a function of transmitting a NAS message from the first terminal device to the NAS layer.

In a possible implementation, the RRC layer function includes only at least one of the following: a function of receiving broadcast system information, a function of establishing, configuring, maintaining, or releasing a data radio bearer, a function of sending or receiving a measurement report, and a function of controlling measurement report reporting. The function of controlling measurement report reporting may include a condition, a rule, and the like for the terminal to control measurement report reporting.

Based on the foregoing solution, the RRC layer function of the terminal device may be simplified, to reduce a code amount and data of a corresponding RRC layer function, and reduce complexity of the terminal device.

In a possible implementation, the MAC layer function does not include at least one of the following: a function of multiplexing and demultiplexing a MAC layer protocol data unit, a scheduling information reporting function, a function of indicating an error by using a hybrid automatic repeat request (hybrid auto repeat request, HARQ), a priority processing function, and a padding (padding) function.

In a possible implementation, the MAC layer function includes only a single HARQ process. For example, the MAC layer function does not support 16 HARQ processes. In this way, while a basic HARQ process-related function is ensured, a corresponding code amount and data amount can be reduced to a maximum extent, to reduce power consumption of the terminal device.

Based on the foregoing solution, the MAC layer function of the terminal device may be simplified, to reduce a code amount and data of a corresponding MAC layer function, and reduce complexity of the terminal device.

In a possible implementation, the PHY layer function does not include at least one of the following: a closed-loop power control function and a multi-antenna mapping function.

In a possible implementation, a modulation and coding function in the PHY layer function includes only some of the following function items: quadrature phase shift keying QPSK modulation, binary phase shift keying BPSK modulation, π/2-BPSK modulation, quadrature amplitude modulation 16QAM including 16 symbols, quadrature amplitude modulation 64QAM including 64 symbols, and quadrature amplitude modulation 256QAM including 256 symbols. For example, the modulation and coding function in the PHY layer function includes only one of the foregoing, for example, QPSK modulation. In this way, while a basic modulation and coding function is ensured, a code amount and a data amount corresponding to the modulation and coding function in the PHY layer function can be reduced to a maximum extent, to reduce power consumption of the terminal device.

Based on the foregoing solution, the PHY layer function of the terminal device may be simplified, to reduce a code amount and data of a corresponding PHY layer function, and reduce complexity of the terminal device.

In a possible implementation, the first terminal device does not have a user plane function. Alternatively, the first terminal device does not support a user data transmission function.

Based on the foregoing solution, the terminal device may not have the user plane function. This simplifies a function of the terminal device, to reduce power consumption of the terminal device.

In a possible implementation, the at least one reference signal is used for positioning. For example, the at least one reference signal may be an uplink positioning reference signal, a downlink positioning reference signal, or another reference signal.

In a possible implementation, the first terminal device sends first information, where the first information indicates that the first terminal device is a positioning terminal.

Based on the foregoing solution, the terminal device may be used for positioning, and the terminal device may indicate, to a network device by using the first information, that the terminal device is a positioning terminal, so that the network device can allocate the configuration information of the positioning reference signal to the terminal device.

In a possible implementation, the first terminal device sends a sequence number, where the sequence number is authentication information of the first terminal device.

Based on the foregoing solution, simplification of a function or a protocol stack of the first terminal may result in simplification or missing of a security function, for example, missing of an identity authentication function of the network for a user. Therefore, the first terminal sends the sequence number to a base station, to implement a technical solution in which the base station performs authentication on the first terminal, so as to improve security of information exchange between the terminal and the network.

In a possible implementation, the first terminal device receives timing advance information; and the first terminal device sends the at least one reference signal based on the configuration information and the timing advance information.

In a possible implementation, the first terminal device receives second information, where the second information indicates a serving network device of the first terminal device.

Based on the foregoing solution, simplification of a function or a protocol stack of the first terminal may result in simplification or missing of a security function, for example, missing of an identity authentication function of the network for a user. Therefore, the base station sends the second information to the first terminal, to implement a technical solution of indicating that the base station is a valid serving base station, so as to improve security of information exchange between the terminal and the network.

In a possible implementation, the first information is information carried in a first message in a four-step random access procedure or a third message in a four-step random access procedure, or the first information is information carried in a first message in a two-step random access procedure.

In a possible implementation, the first terminal device receives the configuration information that is of the at least one reference signal and that is sent by a second terminal device; or the first terminal device receives the configuration information that is of the at least one reference signal and that is sent by a network device.

Based on the foregoing solution, the terminal device may receive the configuration information of the at least one reference signal through a relay device, or may receive the configuration information of the at least one reference signal from the network device. Because simplification of a function of the first terminal may result in simplification or missing of a security function, a solution in which the configuration information of the at least one reference signal is received through the relay device can improve information transmission security. In addition, because the terminal device does not need to directly communicate with the network, but communicates with the network through the relay device, complexity and signaling overheads of the terminal device can be further reduced, to reduce power consumption of the terminal device.

In a possible implementation, the configuration information of the at least one reference signal is information carried in a second message in the four-step random access procedure or a fourth message in the four-step random access procedure, or the configuration information of the at least one reference signal is information carried in a second message in the two-step random access procedure.

Based on the foregoing solution, compared with a technical solution in which the network device broadcasts the configuration information, the technical solution in which the network device may send the configuration information to the first terminal device in the random access procedure may enable the first terminal device to determine that the configuration information is sent to the first terminal device, to reduce information ambiguity, for example, to avoid a case in which if a plurality of terminal devices send reference signals based on the same configuration information after receiving the broadcast information, a resource conflict is caused, and to improve data transmission security.

In a possible implementation, the configuration information includes duration of the at least one reference signal; and duration in which the first terminal device sends the at least one reference signal does not exceed the duration.

Based on the foregoing solution, simplification of a function or a protocol stack of the first terminal may result in a case in which the first terminal does not have a connected mode information transmission function, or may result in a case in which the terminal cannot maintain communication with the network, for example, the terminal cannot receive control information from the network, and consequently the terminal does not know when to start or stop transmission. Therefore, the technical solution of indicating the reference signal sending duration to the first terminal is used, to limit total duration in which the first terminal sends the reference signal, and further reduce power consumption of the terminal.

According to a second aspect, a communication method is provided. The method may be performed by a network device or a chip. In the method, the network device receives first information, where the first information indicates that a first terminal device is a positioning terminal; and the network device sends configuration information of at least one reference signal, where the first terminal device is not configured to receive or send at least one of the following: a NAS message, an LPP message, connected mode information, and a paging message.

In a possible implementation, the network device receives a sequence number, where the sequence number is authentication information of the first terminal device.

In a possible implementation, the network device sends timing advance information, where the timing advance information indicates an advance time for the first terminal device to send the at least one reference signal.

In a possible implementation, the network device sends second information, where the second information indicates a serving network device of the first terminal device.

In a possible implementation, the network device receives the first information sent by the first terminal device; or the network device receives the first information sent by a second terminal device.

In a possible implementation, the network device sends the configuration information of the at least one reference signal to the first terminal device; or the network device sends the configuration information of the at least one reference signal to the second terminal device.

In a possible implementation, the first information is information carried in a first message in a four-step random access procedure or a third message in a four-step random access procedure, or the first information is information carried in a first message in a two-step random access procedure.

In a possible implementation, the configuration information of the at least one reference signal is information carried in a second message in the four-step random access procedure or a fourth message in the four-step random access procedure, or the configuration information of the at least one reference signal is information carried in a second message in the two-step random access procedure.

In a possible implementation, the configuration information includes duration of the at least one reference signal; and duration in which the network device receives the at least one reference signal does not exceed the duration.

According to a third aspect, a communication method is provided. The method may be performed by a terminal device or a chip. In the method, a second terminal device receives configuration information that is of at least one reference signal and that is sent by a network device; and the second terminal device sends the configuration information to a first terminal device, where the first terminal device is not configured to receive or send at least one of the following: a NAS message, an LPP message, connected mode information, and a paging message.

In a possible implementation, the second terminal device receives first information sent by the first terminal device, where the first information indicates that the first terminal device is a positioning terminal; and the second terminal device sends the first information to the network device.

In a possible implementation, the second terminal device receives second information sent by the network device, where the second information indicates a serving network device of the first terminal device; and the second terminal device sends the second information to the first terminal device.

In a possible implementation, the second terminal device receives a sequence number sent by the first terminal device, where the sequence number is authentication information of the first terminal device; and the second terminal device sends the sequence number to the network device.

According to a fourth aspect, an embodiment of this application provides a communication apparatus. The apparatus may be a terminal device, or may be a chip used for a terminal device. The apparatus has a function of implementing the method in any implementation of the first aspect, or has a function of implementing the method in any implementation of the third aspect. The function may be implemented by hardware, or may be implemented by executing corresponding software by hardware. The hardware or the software includes one or more modules corresponding to the function.

According to a fifth aspect, an embodiment of this application provides a communication apparatus. The apparatus may be a network device, or may be a chip or a module used for a network device. The apparatus has a function of implementing the method in any implementation of the second aspect. The function may be implemented by hardware, or may be implemented by executing corresponding software by hardware. The hardware or the software includes one or more modules corresponding to the function.

According to a sixth aspect, an embodiment of this application provides a communication apparatus, including a processor and a memory. The memory is configured to store computer instructions, and when the apparatus runs, the processor executes the computer instructions stored in the memory, to enable the apparatus to perform the method in any implementation of the first aspect to the third aspect.

According to a seventh aspect, an embodiment of this application provides a communication apparatus, including units or means (means) configured to perform the steps of the method in any implementation of the first aspect to the third aspect.

According to an eighth aspect, an embodiment of this application provides a communication apparatus, including a processor and an interface circuit. The processor is configured to: communicate with another apparatus through the interface circuit, and perform the method in any implementation of the first aspect to the third aspect. There are one or more processors.

According to a ninth aspect, an embodiment of this application provides a communication apparatus, including a processor coupled to a memory. The processor is configured to invoke a program stored in the memory, to perform the method in any implementation of the first aspect to the third aspect. The memory may be located inside the apparatus, or may be located or outside the apparatus. In addition, there may be one or more processors.

According to a tenth aspect, an embodiment of this application further provides a computer-readable storage medium. The computer-readable storage medium stores instructions. When the instructions are run on a communication apparatus, the method in any implementation of the first aspect to the third aspect is performed.

According to an eleventh aspect, an embodiment of this application further provides a computer program product. The computer program product includes a computer program or instructions. When the computer program or the instructions are run by a communication apparatus, the method in any implementation of the first aspect to the third aspect is performed.

According to a twelfth aspect, an embodiment of this application further provides a chip system, including a processor, configured to perform the method in any implementation of the first aspect to the third aspect.

According to a thirteenth aspect, an embodiment of this application further provides a communication system, including a terminal device configured to perform the method in any implementation of the first aspect and a network device configured to perform the method in any implementation of the second aspect.

According to a fourteenth aspect, an embodiment of this application further provides a communication system, including a terminal device configured to perform the method in any implementation of the first aspect, a network device configured to perform the method in any implementation of the second aspect, and a terminal device configured to perform the method in any implementation of the third aspect.

### BRIEF DESCRIPTION OF DRAWINGS

FIG. 1 is a diagram of a communication system according to an embodiment of this application;
FIG. 2 is a diagram of a protocol stack of a 5G terminal;
FIG. 3A is a diagram 1 of a protocol stack of a terminal according to an embodiment of this application;
FIG. 3B is a diagram 1 of a protocol stack of a terminal according to an embodiment of this application;
FIG. 3C is a diagram 1 of a protocol stack of a terminal according to an embodiment of this application;
FIG. 3D is a diagram 1 of a protocol stack of a terminal according to an embodiment of this application;
FIG. 4 is an example flowchart 1 of a communication method according to an embodiment of this application;
FIG. 5 is a diagram of sending a reference signal based on timing advance information according to an embodiment of this application;
FIG. 6 is a diagram of sending a reference signal based on reference signal sending duration according to an embodiment of this application;
FIG. 7 is an example flowchart 1 of a communication method according to an embodiment of this application;
FIG. 8 is an example flowchart 1 of a communication method according to an embodiment of this application;
FIG. 9 is a diagram 1 of a communication apparatus according to an embodiment of this application;
FIG. 10 is a diagram 1 of a communication apparatus according to an embodiment of this application; and
FIG. 11 is a diagram of a terminal according to an embodiment of this application.

### DESCRIPTION OF EMBODIMENTS

To facilitate understanding of the technical solutions provided in embodiments of this application, the following provides descriptions with reference to the accompanying drawings.

Various aspects, embodiments, or features are presented in this application by using a system that may include a plurality of devices, components, modules, and the like. It should be understood and appreciated that each system may include another device, component, module, and the like, and/or may not include all devices, components, modules, and the like described with reference to the accompanying drawings. In addition, a combination of these solutions may be used.

The network architecture and the service scenario described in embodiments of this application are intended to describe the technical solutions in embodiments of this application more clearly, and do not constitute a limitation on the technical solutions provided in embodiments of this application. A person of ordinary skill in the art may learn that with evolution of the network architecture and emergence of a new service scenario, the technical solutions provided in embodiments of this application are also applicable to similar technical problems.

The method and the apparatus provided in embodiments of this application may be used in various communication systems, for example, long term evolution (long term evolution, LTE), a 5th generation (5th generation, 5G), new radio (new radio, NR), wireless fidelity (wireless fidelity, Wi-Fi), 3rd generation partnership project (3rd generation partnership project, 3GPP)-related wireless communication, or other wireless communication that may appear in the future.

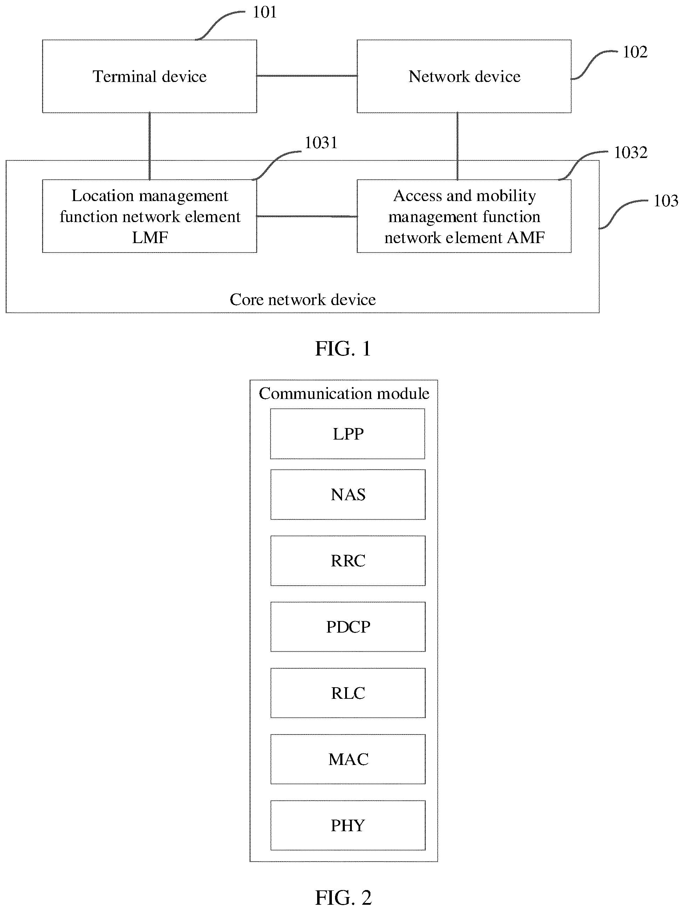

To facilitate understanding of embodiments of this application, a communication system shown in FIG. 1 is first used as an example to describe in detail a communication system applicable to embodiments of this application. FIG. 1 is a diagram of a communication system applicable to a communication method according to an embodiment of this application. As shown in FIG. 1, the communication system 100 includes a terminal device 101, a network device 102, and a core network device 103. The core network device 103 further includes network elements such as an access and mobility management function network element AMF 1032 and a location management function network element LMF 1031.

The following describes and explains each network element in the communication system.

Functions of network elements or devices in the communication system in this embodiment of this application are described below in detail.

The terminal device 101 may also be referred to as user equipment (user equipment, UE), a mobile station (mobile station, MS), a mobile terminal (mobile terminal, MT), or the like, and is a device that provides voice and/or data connectivity for a user. For example, the terminal device may include a handheld device with a wireless connection function or a vehicle-mounted device. Currently, the terminal device may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. In FIG. 2, the terminal device is shown as UE. This is merely used as an example, and constitutes no limitation on the terminal device. In embodiments of this application, an example in which the terminal device is a terminal is used for description.

The network device 102 is an access device through which the terminal device accesses the mobile communication system in a wireless manner, and includes an access network (access network, AN) device, for example, a base station. The network device may alternatively be a device that communicates with the terminal device over an air interface. The network device may include an evolved NodeB (evolved NodeB) (which may be briefly referred to as an eNB or an e-NodeB) in a long term evolution (long term evolution, LTE) system or a long term evolution-advanced (long term evolution-advanced, LTE-A) system. The eNB is an apparatus that is deployed in a radio access network, that meets a fourth generation (fourth generation, 4G) mobile communication technology standard, and that provides a wireless communication function for the terminal device. The network device may alternatively be a new radio controller (new radio controller, NR controller), a gNodeB (gNB) in a 5G system, a central unit (central unit), a new radio base station, a remote radio module, a micro base station (which is also referred to as a small cell), a relay (relay), a distributed unit (distributed unit), a macro base station in various forms, a transmission reception point (transmission reception point, TRP), a transmission measurement function (transmission measurement function, TMF), a transmission point (transmission point, TP), or any other radio access device. Embodiments of this application are not limited thereto. The network device may alternatively include a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless fidelity (wireless fidelity, Wi-Fi) access point (access point, AP), or the like. A specific technology and a specific device form used by the network device are not limited in embodiments of this application. The network device may correspond to the eNB in a 4G system, and correspond to the gNB in the 5G system. In embodiments of this application, an example in which the network device is a base station is used for description.

In addition, the base station in embodiments of this application may include a central unit (central unit, CU) and a distributed unit (distributed unit, DU), and a plurality of DUs may be centrally controlled by one CU. The CU and the DU may be classified based on protocol layer functions that are of a wireless network and that the CU and the DU have. For example, functions of a PDCP layer and a protocol layer above the PDCP layer are set on the CU, and functions of protocol layers below the PDCP layer, for example, an RLC layer and a MAC layer, are set on the DU. It should be noted that such protocol layer division is merely an example, and there may be other protocol layer division. A radio frequency apparatus may be remotely deployed and not placed in the DU, may be integrated into the DU, or may be partially remotely disposed and partially integrated into the DU. This is not limited in embodiments of this application. In addition, in some embodiments, a control plane (control plane, CP) and a user plane (user plane, UP) of the CU may be further separated into different entities for implementation, where the entities are respectively a CU-control plane entity (CU-CP entity) and a CU-user plane entity (CU-UP entity). In the network architecture, signaling generated by the CU may be sent to the terminal device through the DU, or signaling generated by the UE may be sent to the CU through the DU. The DU may directly transparently transmit the signaling to the UE or the CU through protocol layer encapsulation without parsing the signaling. In the network architecture, the CU is classified as a network device on a radio access network (radio access network, RAN) side. In addition, the CU may alternatively be classified as a network device on a core network (core network, CN) side. This is not limited in this application.

The access and mobility management function network element AMF 1032 may be configured to manage access control and mobility of the terminal device. For example, in 5G, the access and mobility management function network element may be an AMF (access and mobility management function) network element, for example, as shown in FIG. 1. In future communication, for example, in a 6th generation mobile communication technology (6th generation mobile technology, 6G), the access and mobility management function network element may still be an AMF network element or have another name. This is not limited in this application.

The location management function network element LMF 1031 may be configured to: determine a location of the UE, obtain downlink location measurement or location estimation from the UE, and the like. The location management function network element may include a location management function (location management function, LMF) or a location management component (location management component, LMC), or may be a local location management function (local location management function, LLMF) located in the network device. This is not limited in embodiments of this application. For ease of description, in the following embodiments, an example in which the location management device is an LMF is used for description.

As shown in FIG. 1, in a future communication system such as 6G, the location management function network element may still be an LMF network element or have another name. This is not limited in this application.

To facilitate understanding of the technical solutions provided in embodiments of this application, the following explains and describes the technical terms in this application.

(1) A reference signal may include a positioning reference signal used for positioning and a reference signal used for a non-positioning purpose. The positioning reference signal may include an uplink sounding reference signal (uplink sounding reference signal, UL-SRS) and a downlink positioning reference signal (downlink positioning reference signal, DL-PRS).

(2) Configuration information of a reference signal is information, for example, a time-frequency resource, used to configure the reference signal. The configuration information may include one or more of the following: scrambling information, location information, period information, interval information, frequency hopping information, density information, reserved time information, tuning time information, and non-simultaneous sending information. In embodiments of this application, in this application, a time unit may be a slot, a symbol, a mini-slot, a frame, a subframe, or a half-frame.

The scrambling information includes at least one of the following: a scrambling range and a scrambling value set of m reference signals.

The location information is location information of time domain resources occupied by the m reference signals, for example, a start sending time domain location and an end sending time domain location of the reference signal, or a start sending time domain location of the reference signal and a time domain length of the reference signal.

The period information is a sending period of the m reference signals, and the period information may also be understood as a period of time domain resources of the m reference signals.

The interval information is a sending time interval between reference signals corresponding to two adjacent time units in the m reference signals.

The density information is a quantity of times the m reference signals are sent within a specific time range.

The reserved time information is a time length that needs to be reserved before the m reference signals are sent, a time length that needs to be reserved after the m reference signals are sent, or a time length that needs to be reserved between two adjacent time units.

The tuning time information is a time occupied for frequency tuning (radio frequency retuning, RF retuning).

Non-simultaneous sending information means that when sending the m reference signals, a terminal does not support sending information other than the m reference signals.

The frequency hopping information includes one or more of the following information:

Information indicating whether sending of the m reference signals in a frequency hopping manner is supported: That is, the information is frequency hopping between two adjacent reference signals in the m reference signals.

Quantity of hops for sending the m reference signals in a specific time: The quantity of hops may be understood as follows: In an example of two adjacent reference signals in the m reference signals, if the two adjacent reference signals are transmitted in the frequency hopping manner, a quantity of hops between the two reference signals is 1.

Quantity of resource blocks (resource blocks, RBs) occupied for frequency hopping between two adjacent reference signals in the m sent reference signals: The quantity may also be understood as a quantity of RBs between a frequency domain start location of a latter reference signal (a latter hop of reference signal) and a frequency domain start location of a former reference signal (a former hop of reference signal) in the two adjacent reference signals (two adjacent hops of reference signals).

Resource width corresponding to frequency hopping between two adjacent reference signals in the m sent reference signals: The resource width may also be understood as a size (width) of a frequency domain resource between a frequency domain start location of a latter reference signal (a latter hop of reference signal) and a frequency domain start location of a former reference signal (a former hop of reference signal) in the two adjacent reference signals (two adjacent hops of reference signals).

Frequency hopping offset between two adjacent reference signals in the m sent reference signals: In an embodiment, the frequency hopping offset may be an offset of a frequency domain start location of a latter reference signal (a latter hop of reference signal) in the two adjacent reference signals (two adjacent hops of reference signals) relative to a predetermined frequency domain location. The predetermined frequency domain location may be determined based on the foregoing quantity of RBs occupied for frequency hopping or the foregoing resource width corresponding to frequency hopping, may be a frequency domain start location of a former reference signal, or may be a specified frequency domain reference location.

(3) A deep sleep current (deep sleep current) is a current required for maintaining a most basic function when a terminal is in a sleep period or not connected to a network, and is related to a factor such as a protocol stack function. Generally, a larger quantity of functions supported by the terminal in a deep sleep period indicates a larger amount of code and data in hardware storage (for example, a static random access memory (static random access memory, SRAM) or a flash memory (Flash)) space, a higher deep sleep current, and higher power consumption of the terminal.

(4) Downlink synchronization means that a terminal performs frequency, phase, and 10-ms frame synchronization and cell synchronization with a base station by using a binary synchronization signal sequence periodically sent by the base station at a specific location. Only after synchronization, the terminal can obtain, through demodulation, a master information block (master information block, MIB) and system information (system information block, SIB) broadcast by a cell. Therefore, obtaining downlink synchronization is a start point for establishing communication between the terminal and the base station.

(5) A protocol stack function is a function or a service provided by a layer of a protocol stack. For example, an RRC layer function may include a function or service provided by an RRC layer, for example, a function or service of receiving broadcast system information, a function or service of establishing, configuring, maintaining, or releasing a data radio bearer (data radio bearer, DRB), a function or service of sending or receiving a measurement report, a function or service of controlling measurement report reporting, a paging message receiving function or service, a function or service of establishing, maintaining, or releasing an RRC connection to a network, a function or service of establishing, configuring, maintaining, or releasing a signaling radio bearer, a QoS management function or service, a function or service of detecting and rectifying a radio link failure, a function or service of transmitting a NAS message from a NAS layer to a first terminal device, and a function or service of transmitting a NAS message from the first terminal device to the NAS layer.

A main function of a current 5G terminal is to support communication, for example, data transmission, and a positioning function may be an optional function. To support a complete communication function, the 5G terminal needs to support a complete protocol stack function. With reference to FIG. 2, the protocol stack function of the current 5G terminal may include a transmission long term evolution positioning protocol (long term evolution positioning protocol, LPP) layer function, a non-access stratum (non-access stratum, NAS) layer function, a radio resource control (radio resource control, RRC) layer function, a packet data convergence protocol (packet data convergence protocol, PDCP) layer function, a radio link control (radio link control, RLC) layer function, a medium access control (medium access control, MAC) layer function, and a physical (physical, PHY) layer function.

Table 1 shows an example of power consumption analysis of a 5G terminal.

**Table 1 Power consumption analysis of the 5G terminal**

| Working state working state | Power unit (baseline) power unit (baseline) | Instances (40.96s) time unit | Energy energy consumption | Energy ratio energy consumption ratio |
|---|---|---|---|---|
| Ramp up+down power ramp up+power ramp down | 450 | 36 | 16200 | 11.36% |
| Cell access cell access | 15690 | 4 | 62760 | 44.02% |
| SRS+paging SRS sending+paging | 870 | 8 | 6960 | 4.88% |
| Paging paging | 705 | 24 | 16920 | 11.87% |
| Deep sleep deep sleep | 1 | 39728 | 39728 | 27.87% |
| Total power unit total power unit | | | 142568 | |

It may be learned that a deep sleep current is an important factor that affects power consumption/standby duration of the 5G terminal. Therefore, a higher deep sleep current of the 5G terminal indicates higher power consumption and a shorter standby time of the 5G terminal. However, for a terminal that has only a positioning requirement, for example, a terminal that has no data and signaling transmission requirement other than a basic positioning function, a current protocol stack structure and function are excessively complex, and consequently operation complexity and signaling overheads of the terminal are excessively high, resulting in excessively high positioning power consumption of the terminal.

In view of this, embodiments of this application provide a communication method. In the method, a protocol stack function of a terminal is simplified to support a basic positioning function. Compared with that in a current protocol stack architecture, the protocol stack function is simplified. In this way, a code amount and data of a corresponding function can be effectively reduced, and hardware storage (for example, a static random access memory (SRAM) or a flash memory (Flash)) space can be effectively reduced, to reduce a deep sleep current of the terminal. In addition, complexity and signaling overheads of performing the corresponding function by the terminal can be effectively reduced, to reduce power consumption of the terminal.

In embodiments of this application, the terminal may not be configured to receive or send at least one of the following: a NAS message, an LPP message, connected mode information, and a paging message. For example, the terminal may not have a function of receiving or sending the NAS message. In other words, a protocol stack of the terminal may not include a NAS layer, the terminal does not have a processing function of a NAS layer, or the terminal does not support a service of a NAS layer. For another example, the terminal may not have a function of receiving or sending the LPP message. In other words, a protocol stack of the terminal may not include an LPP layer, the terminal may not have a processing function of an LPP layer, or the terminal does not support a service of an LPP layer.

For another example, a protocol stack of the terminal may include an RRC layer, the terminal may have a function of sending or receiving the connected mode information, or the terminal may have a connected mode information transmission function, but the terminal may not be configured to receive or send the connected mode information. The connected mode information includes connected mode data, signaling, control information, and the like. A 5G new radio (new radio, NR) network supports three RRC modes, including an RRC idle mode (RRC_IDLE), an RRC inactive mode (RRC_INACTIVE), and an RRC connected mode (RRC_CONNECTED). In embodiments of this application, data and signaling exchanged with a base station when the terminal is in the RRC connected mode may be considered as connected mode information or data, and a behavior of exchanging data and signaling with the base station when the terminal is in the RRC connected mode may be considered as connected mode information transmission.

After the terminal accesses a network and establishes an RRC connection to a serving base station, when the terminal temporarily has no data transmission requirement, to save energy and resources, the network ends the RRC connection of the terminal, and releases a related radio resource, and the terminal changes from the RRC connected mode to the RRC inactive mode or the RRC idle mode. When the network needs to send data to the terminal, the base station initiates paging. For example, the base station may broadcast a paging message. In embodiments of this application, the terminal may not be configured to receive the paging message. For example, the protocol stack of the terminal may include the RRC layer, and the terminal may support an RRC function, but the terminal may not be configured to receive the paging message.

Optionally, the terminal provided in embodiments of this application may have only at least one of the following: a PHY layer function, an RRC layer function, and a MAC layer function. For example, the protocol stack function of the terminal may include only the PHY layer function, or the terminal may support only a PHY layer service. For another example, the protocol stack function of the terminal may include only the RRC layer function, or the terminal may support only an RRC layer service. For another example, the protocol stack function of the terminal may include only the MAC layer function, or the terminal may support only a MAC layer service. For another example, the protocol stack function of the terminal may include only the PHY layer function and the RRC layer function, or the terminal may support only a PHY layer service and an RRC layer service. For another example, the protocol stack function of the terminal may include only the PHY layer function and the MAC layer function, or the terminal may support only a PHY layer service and a MAC layer service. For another example, the protocol stack function of the terminal may include only the MAC layer function and the RRC layer function, or the terminal may support only a MAC layer service and an RRC layer service.

Based on the foregoing solution, the protocol stack or the protocol stack function of the terminal is simplified, for example, the terminal may not include the LPP layer and/or the NAS layer, or a function of the terminal is simplified. Therefore, signaling overheads and processing complexity of the terminal can be reduced, to reduce power consumption of the terminal.

A plurality of solutions for simplifying a protocol stack or a protocol stack function of a terminal or a function of a terminal are provided in embodiments of this application, and are separately described below.

Solution 1: The terminal does not have an LPP layer function.

The terminal does not have the LPP layer function. For example, the protocol stack of the terminal may not include an LPP layer, or the protocol stack of the terminal may include an LPP layer, but the terminal may not be configured to receive or send an LPP message. In other words, the terminal may have only a NAS function, an RRC layer function, a PHY layer function, a MAC layer function, a PDCP layer function, and an RLC layer function. Alternatively, the protocol stack of the terminal may include only a NAS layer, an RRC layer, a PHY layer, a MAC layer, a PDCP layer, and an RLC layer.

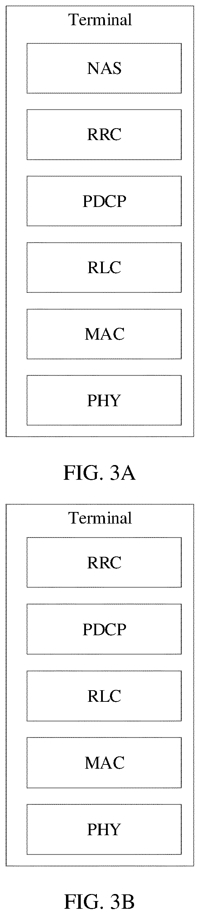

FIG. 3A is a diagram of a protocol stack of a terminal according to an embodiment of this application. As shown in FIG. 3A, the protocol stack of the terminal may not include an LPP layer, and the protocol stack of the terminal may include only a NAS layer, an RRC layer, a PHY layer, a MAC layer, a PDCP layer, and an RLC layer. Therefore, the terminal does not have an LPP layer function, that is, the terminal does not support an LPP layer service, or the terminal does not have a function of receiving or sending an LPP message.

Based on the foregoing solution, the terminal may not have the LPP layer function, or the protocol stack of the terminal may not include the LPP layer. Therefore, the protocol stack of the terminal or the function of the terminal is simplified. In this way, a code amount and data of the LPP layer function can be reduced or removed, and hardware storage space can be reduced, to reduce a deep sleep current. In addition, signaling overheads of the terminal, for example, overheads of the LPP message, can be reduced, and processing complexity of the terminal, for example, complexity of the LPP layer function, can be reduced, to reduce power consumption of the terminal.

Solution 2: The terminal does not have an LPP layer function and a NAS layer function.

In addition to the LPP layer function shown in the solution 1, the terminal may further not have the NAS layer function. For example, the protocol stack of the terminal may not include a NAS layer, or the protocol stack of the terminal may include a NAS layer, but the terminal may not be configured to receive or send a NAS message.

In other words, the terminal may have only an RRC layer function, a PHY layer function, a MAC layer function, a PDCP layer function, and an RLC layer function. Alternatively, the protocol stack of the terminal may include only an RRC layer, a PHY layer, a MAC layer, a PDCP layer, and an RLC layer.

FIG. 3B is a diagram of a protocol stack of a terminal according to an embodiment of this application. As shown in FIG. 3B, the protocol stack of the terminal may not include an LPP layer and a NAS layer, and the protocol stack of the terminal may include an RRC layer, a PHY layer, a MAC layer, a PDCP layer, and an RLC layer. Therefore, the terminal does not have an LPP layer function, that is, the terminal supports an LPP layer service, or the terminal does not have a function of receiving or sending an LPP message. In addition, the terminal does not have a NAS layer function, that is, the terminal does not support a NAS layer service, or the terminal does not have a message for receiving or sending a NAS message.

Based on the foregoing solution, the terminal may not have the LPP layer function and the NAS layer function, or the protocol stack of the terminal may not include the LPP layer and the NAS layer. Therefore, the protocol stack of the terminal or the function of the terminal is simplified. In this way, code amounts and data of the LPP layer function and the NAS layer function can be reduced or removed, and hardware storage space can be reduced, to reduce a deep sleep current. In addition, signaling overheads of the terminal, for example, overheads of the LPP message and the NAS message, can be reduced, and processing complexity of the terminal, for example, complexity of the LPP layer and the NAS layer, can be reduced, to reduce power consumption of the terminal. Compared with the solution 1, in the solution 2, the terminal may further not have the NAS function. Therefore, the code amount and the data of the NAS layer function can be further reduced, and the hardware storage space can be further reduced, to reduce the deep sleep current. In addition, the signaling overheads of the terminal, that is, the overheads of the NAS message, can be further reduced, and the processing complexity of the terminal, for example, the complexity of the NAS layer, can be further reduced, to further reduce the power consumption of the terminal.

Solution 3: The terminal does not have an LPP layer function, a NAS layer function, and a connected mode information transmission function.

In addition to the LPP layer function and the NAS layer function shown in the solution 2, the terminal may further not have the connected mode information transmission function. For example, the protocol stack of the terminal does not include an RRC layer, or the protocol stack of the terminal may include an RRC layer, but the terminal may not be configured to receive or send connected mode information, or the terminal has a function other than the connected mode information transmission function in an RRC layer function. For example, the terminal may have functions, for example, a mobility function such as cell selection and cell reselection, a function of receiving or sending a measurement report, a function of receiving or sending a measurement report, and a function of controlling measurement report reporting, in the RRC layer function.

In other words, the terminal may have only a PHY layer function, a MAC layer function, a PDCP layer function, an RLC layer function, and a function other than the connected mode information transmission function at the RRC layer. Alternatively, the protocol stack of the terminal may include only a PHY layer, a MAC layer, a PDCP layer, and an RLC layer. Alternatively, the protocol stack of the terminal may include only the RRC layer, a PHY layer, a MAC layer, a PDCP layer, and an RLC layer, but the terminal is not configured to receive or send the connected mode information, that is, does not have the connected mode information transmission function.

FIG. 3B is a diagram of a protocol stack of a terminal according to an embodiment of this application. As shown in FIG. 3B, the protocol stack of the terminal may not include an LPP layer and a NAS layer, and the protocol stack of the terminal may include an RRC layer, a PHY layer, a MAC layer, a PDCP layer, and an RLC layer. Therefore, the terminal does not have an LPP layer function, that is, the terminal does not support an LPP layer service, or the terminal does not have a function of receiving or sending an LPP message. In addition, the terminal does not have a NAS layer function, that is, the terminal does not support a NAS layer service, or the terminal has a function of receiving or sending a NAS message. As shown in FIG. 3B, although the protocol stack of the terminal includes the RRC layer, the terminal may not have a connected mode information transmission function, or the terminal may not be configured to receive or send connected mode information. The terminal may have a function other than the connected mode information transmission function at the RRC layer.

Based on the foregoing solution, the terminal may not have the LPP layer function, the NAS layer function, and the connected mode information transmission function, or the protocol stack of the terminal may not include the LPP layer and the NAS layer. Therefore, the protocol stack of the terminal or the function of the terminal is simplified. In this way, code amounts and data of the LPP layer function, the NAS layer function, and the RRC layer function can be reduced or removed, and hardware storage space can be reduced, to reduce a deep sleep current. In addition, signaling overheads of the terminal, for example, overheads of the LPP message, the NAS message, and the connected mode information, can be reduced, and processing complexity of the terminal, for example, complexity of the LPP layer, the NAS layer, and the RRC layer, can be reduced, to reduce power consumption of the terminal. Compared with the solution 1 and the solution 2, in the solution 3, the terminal may further not have the connected mode information transmission function. Therefore, the code amount and the data of the RRC layer function can be further reduced, and the hardware storage space can be further reduced, to reduce the deep sleep current. In addition, the signaling overheads of the terminal, that is, the overheads of the connected mode information, can be further reduced, to further reduce the power consumption of the terminal.

Solution 4: The terminal does not have an LPP layer function, a NAS layer function, a connected mode information transmission function, and a PDCP layer function.

In addition to the LPP layer function, the NAS layer function, and the connected mode information transmission function shown in the solution 3, the terminal may further not have the PDCP layer function. For example, the protocol stack of the terminal may not include a PDCP layer, or the protocol stack of the terminal may include a PDCP layer, but the terminal may not be configured to perform an operation of the PDCP layer function, for example, internet protocol (internet protocol, IP) header compression, encryption, and integrity protection.

In other words, the terminal may have only a PHY layer function, a MAC layer function, an RLC layer function, and a function other than the connected mode information transmission function at an RRC layer. Alternatively, the protocol stack of the terminal may include only a PHY layer, a MAC layer, and an RLC layer. Alternatively, the protocol stack of the terminal may include only an RRC layer, a PHY layer, a MAC layer, and an RLC layer, but the terminal is not configured to receive or send connected mode information, that is, does not have the connected mode information transmission function.

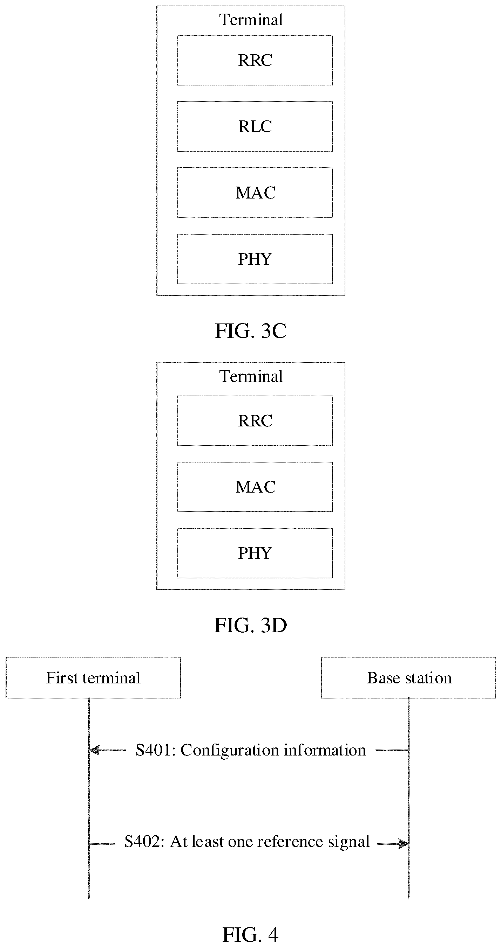

FIG. 3C is a diagram of a protocol stack of a terminal according to an embodiment of this application. As shown in FIG. 3C, the protocol stack of the terminal may not include an LPP layer, a NAS layer, and a PDCP layer, and the protocol stack of the terminal may include an RRC layer, a PHY layer, a MAC layer, and an RLC layer. Therefore, the terminal does not have an LPP layer function, that is, the terminal does not support an LPP layer service, or the terminal does not have a function of receiving or sending an LPP message. In addition, the terminal does not have a NAS layer function, that is, the terminal does not support a NAS layer service, or the terminal does not have a function of receiving or sending a NAS message. Furthermore, the terminal does not have a PDCP layer function, or the terminal does not support a PDCP layer service. As shown in FIG. 3C, although the protocol stack of the terminal includes the RRC layer, the terminal may not have a connected mode information transmission function, or the terminal may not be configured to receive or send connected mode information. The terminal may have a function other than the connected mode information transmission function at the RRC layer.

Based on the foregoing solution, the terminal may not have the LPP layer function, the NAS layer function, the connected mode information transmission function, and the PDCP layer function, or the protocol stack of the terminal may not include the LPP layer, the NAS layer, and the PDCP layer. Therefore, the protocol stack of the terminal or the function of the terminal is simplified. In this way, code amounts and data of the LPP layer function, the NAS layer function, and the RRC layer function can be reduced or removed, and hardware storage space can be reduced, to reduce a deep sleep current. In addition, signaling overheads of the terminal, for example, overheads of the LPP message, the NAS message, and the connected mode information, can be reduced, and processing complexity of the terminal, for example, complexity of the LPP layer function, the NAS layer function, the RRC layer function, and the PDCP layer function, can be reduced, to reduce power consumption of the terminal. Compared with the solution 1 to the solution 3, in the solution 4, the terminal may further not have the PDCP layer function. Therefore, the code amount and the data of the PDCP layer can be further reduced, and the hardware storage space can be reduced, to reduce the deep sleep current. In addition, the processing complexity of the terminal can be further reduced, to further reduce the power consumption of the terminal.

Solution 5: The terminal does not have an LPP layer function, a NAS layer function, a connected mode information transmission function, a PDCP layer function, and an RLC layer function.

In addition to the LPP layer function, the NAS layer function, the connected mode information transmission function, and the PDCP layer function shown in the solution 4, the terminal may further not have the RLC layer function. For example, the protocol stack of the terminal may not include an RLC layer, or the protocol stack of the terminal may include an RLC layer, but the terminal may not be configured to perform an operation of the RLC layer function, for example, data segmentation, data retransmission, and RLC reestablishment.

In other words, the terminal may have only a PHY layer function and a MAC layer function. Alternatively, the terminal may have only a PHY layer function, a MAC layer function, and a function other than the connected mode information transmission function at an RRC layer. Alternatively, the protocol stack of the terminal may include only a PHY layer and a MAC layer. Alternatively, the protocol stack of the terminal may include only an RRC layer, a PHY layer, and a MAC layer, but the terminal is not configured to receive or send connected mode information, that is, does not have the connected mode information transmission function.

FIG. 3D is a diagram of a protocol stack of a terminal according to an embodiment of this application. As shown in FIG. 3D, the protocol stack of the terminal may not include an LPP layer, a NAS layer, a PDCP layer, and an RLC layer, and the protocol stack of the terminal may include an RRC layer, a PHY layer, and a MAC layer. Therefore, the terminal does not have an LPP layer function, that is, the terminal does not support an LPP layer service, or the terminal does not have a function of receiving or sending an LPP message. In addition, the terminal does not have a NAS layer function, that is, the terminal does not support a NAS layer service, or the terminal does not have a function of receiving or sending a NAS message. Furthermore, the terminal does not have a PDCP layer function, or the terminal does not support a PDCP layer service. In addition, the terminal further does not have an RLC layer function, or the terminal does not support an RLC layer service. As shown in FIG. 3D, although the protocol stack of the terminal includes the RRC layer, the terminal may not have a connected mode information transmission function, or the terminal may not be configured to receive or send connected mode information. The terminal may have a function other than the connected mode information transmission function at the RRC layer.

Based on the foregoing solution, the terminal may not have the LPP layer function, the NAS layer function, the connected mode information transmission function, the PDCP layer function, and the RLC layer function, or the protocol stack of the terminal may not include the LPP layer, the NAS layer, the PDCP layer, and the RLC layer. Therefore, the protocol stack of the terminal or the function of the terminal is simplified. In this way, code amounts and data of the LPP layer function, the NAS layer function, the RRC layer function, the PDCP layer function, and the RLC layer function can be reduced or removed, and hardware storage space can be reduced, to reduce a deep sleep current. In addition, signaling overheads of the terminal, for example, overheads of the LPP message, the NAS message, and the connected mode information, can be reduced, and processing complexity of the terminal, for example, complexity of the LPP layer function, the NAS layer function, the RRC layer function, the PDCP layer function, and the RLC layer function, can be reduced, to reduce power consumption of the terminal. Compared with the solution 1 to the solution 4, in the solution 5, the terminal may further not have the RLC layer function. Therefore, the code amount and the data of the RLC layer function can be further reduced, and the hardware storage space can be further reduced, to reduce the deep sleep current. In addition, the processing complexity of the terminal can be further reduced, to reduce the power consumption of the terminal.

It should be noted that in addition to the solution 1 to the solution 5, another protocol stack function simplification or protocol stack simplification combination is also a possible implementation. For example, the terminal may not have the LPP layer function, the NAS layer function, the PDCP layer function, and the RLC layer function.

It should be understood that in the solution 1 to the solution 5, the terminal may have all functions in the PHY layer function, the terminal may further have all functions in the MAC layer function, and the terminal may further have all of functions other than the connected mode information transmission function in the RRC function.

In an example, the RRC layer function may be simplified. For example, the function that is other than the connected mode information transmission function, that is in the RRC layer function, and that the terminal has further does not include at least one of the following: a paging message receiving function, a function of establishing, maintaining, or releasing an RRC connection to a network, a security-related function, a function of establishing, configuring, maintaining, or releasing a signaling radio bearer (signaling radio bearer, SRB), a mobility-related function, a quality of service (quality of service, QoS) management function, a function of detecting and rectifying a radio link failure, a function of transmitting a NAS message from the NAS layer to the terminal, and a function of transmitting a NAS messages from the terminal to the NAS layer. Alternatively, in addition to the connected mode information transmission function, the terminal further does not have at least one of the following functions in the RRC layer function: a paging message receiving function, a function of establishing, maintaining, or releasing an RRC connection to a network, a security-related function, a function of establishing, configuring, maintaining, or releasing an SRB, a mobility-related function, a QoS management function, a function of detecting and rectifying a radio link failure, a function of transmitting a NAS message from the NAS layer to the terminal, and a function of transmitting a NAS messages from the terminal to the NAS layer. The security-related function may include functions such as identity authentication and key derivation and management. The mobility-related function may include mobility restriction, time subscription and notification, intra-system mobility update, and handover between gNBs.

Alternatively, in addition to the connected mode information transmission function, the terminal may further have some of the functions other than the connected mode information transmission function in the RRC layer function. For example, the RRC layer function that the terminal has includes only at least one of a function of broadcasting system information, a function of establishing, configuring, maintaining, or releasing a DRB, a function of sending or receiving a measurement configuration, a function of sending or receiving a measurement report, and a function of controlling measurement report reporting. Alternatively, the terminal has at least one of the following functions in the RRC layer function: a function of broadcasting system information, a function of establishing, configuring, maintaining, or releasing a DRB, a function of sending or receiving a measurement configuration, a function of sending or receiving a measurement report, and a function of controlling measurement report reporting.

In another example, the MAC layer function may be simplified. For example, the terminal may not have at least one of a function of multiplexing and demultiplexing a MAC layer protocol data unit, a scheduling information reporting function, a function of indicating an error by using a HARQ, a priority processing function, and a padding (padding) function in the MAC layer function.

Alternatively, the terminal may have some functions in the MAC layer function. For example, a HARQ-related function in the MAC layer function includes only a simplified HARQ function. For example, the HARQ-related function supports a single HARQ process, and does not support a plurality of HARQ processes, for example, 16 HARQ processes. That is, the HARQ-related function that is in the MAC layer function and that the terminal has includes only a single HARQ process, or the terminal has a function of a single HARQ process in the MAC layer function.

In still another example, the PHY layer function may be simplified. For example, the terminal may not have at least one of a closed-loop power control function and a multi-antenna mapping function in the PHY layer function.

Alternatively, the terminal may have some functions in the PHY layer function. For example, a modulation and coding function in the PHY function may include only some modulation and coding schemes (modulation and coding schemes, MCSs). For example, the modulation and coding function may include some of quadrature phase shift keying (quadrature phase shift keying, QPSK), binary phase shift keying (Bi Phase Shift Keying, BPSK), π/2-BPSK, quadrature amplitude modulation (Quadrature Amplitude Modulation, QAM) including 16 symbols, quadrature amplitude modulation including 64 symbols, and quadrature amplitude modulation including 256 symbols. In other words, the modulation and coding function that is in the PHY layer function and that the terminal has may include only some of the foregoing MCSs, or the terminal has some function items in the PHY layer function. In this way, while a basic modulation and coding function is ensured, a code amount and a data amount corresponding to the modulation and coding function in the PHY layer function can be reduced to a maximum extent, to reduce power consumption of the terminal device.

It should be understood that in the foregoing MCS functions, a target bit rate may be predefined, or may be indicated by a base station. It should be noted that the target bit rate may include only one value. For example, the terminal has the QPSK modulation and coding function in the PHY layer function. For example, the target bit rate may be predefined, for example, 120.

Optionally, the PHY layer function may further include a modulation mapper (modulation mapper) function, a sequence generation (sequence generation) function, an orthogonal frequency division multiplexing (orthogonal frequency division multiplexing, OFDM) baseband signal generation (OFDM baseband signal generation) function, and a modulation and upconversion (modulation and upconversion) function. That is, the PHY layer function that the terminal has includes only the foregoing single MCS, the modulation mapper function, the sequence generation function, the OFDM baseband signal generation function, and the modulation and upconversion function. Alternatively, the terminal has a single MCS function, the modulation mapper function, the sequence generation function, the OFDM baseband signal generation function, and the modulation and upconversion function in the PHY layer function.

In an example, the terminal may not have a user plane function. In other words, the terminal does not support a function or service of transmitting user data. For example, the terminal does not support a function or service of a service data adaptation protocol (service data adaptation protocol, SDAP), or does not support user data transmission, PDCP reestablishment, and the like at the PDCP layer. The function or service of the SDAP may include establishing a mapping between a QoS flow and a radio bearer.

Optionally, the terminal with a simplified function or a simplified protocol stack provided in embodiments of this application may be further used for positioning. Alternatively, the terminal with a simplified function or a simplified protocol stack may be a positioning terminal.

Based on the foregoing terminal, an embodiment of this application provides a communication method. FIG. 4 is an example flowchart of a communication method according to an embodiment of this application. The communication method provided in this application is described below by using a terminal and a base station as execution bodies. It may be understood that the communication method provided in this application may alternatively be performed by an apparatus used for the terminal or an apparatus used for the base station, for example, a chip.

S401: The base station sends configuration information to a first terminal.

Correspondingly, the first terminal receives the configuration information.

The configuration information may be configuration information of at least one reference signal. The at least one reference signal may be used for positioning, for example, may be a positioning reference signal.

The configuration information may be configuration information of one or more groups of reference signals. One group of reference signals may include one or more reference signals. Optionally, each group of reference signals may be used in one positioning procedure.

For example, the configuration information may include time-frequency resource information of the at least one reference signal. For example, the configuration information may include one or more of location information, interval information, and period information. Optionally, the configuration information may further include other information, for example, one or more of scrambling information, frequency hopping information, density information, reserved time information, tuning time information, and non-simultaneous sending information.

S402: The first terminal sends the at least one reference signal.

Correspondingly, the base station receives the at least one reference signal.

For example, the first terminal may send the at least one reference signal based on the configuration information. For example, the first terminal may send the at least one reference signal on a corresponding time-frequency resource based on the time-frequency resource information of the at least one reference signal in the configuration information.

Based on the technical solution shown in FIG. 4, the first terminal with a simplified function or a simplified protocol stack may be used for positioning. Compared with those of an existing terminal, signaling overheads and processing complexity are reduced, and a deep sleep current of the terminal is reduced, to reduce positioning power consumption of the terminal, so as to implement positioning with low power consumption. Compared with that of an existing positioning tag, for example, an ultra-wideband (ultra-wideband, UWB) positioning tag, downlink synchronization with a network may be maintained. Therefore, a terminal capacity in the network can be effectively increased, in other words, a quantity of terminals that can execute a positioning service at a same time can be increased.

Optionally, the base station may measure the at least one reference signal sent by the first terminal, and send a measurement result of the at least one reference signal to a location management function network element, for example, the LMF shown in FIG. 1. The measurement result may be a signal to interference plus noise ratio (signal to interference plus noise ratio, SINR), reference signal received power (reference signal received power, RSRP), reference signal received quality (reference signal received quality, RSRQ), a relative time of arrival (relative time of arrival, RTOA), or an angle of arrival (angle of arrival, AoA) of the PRS. Optionally, the measurement result may alternatively be a quantized result of the foregoing plurality of measurements. The location management function network element may determine location information of the first terminal based on the measurement result of the at least one measurement reference signal, to locate the first terminal. Optionally, the location management function network element may perform processing by using an uplink angle of arrival (uplink angle of arrival, UL-AoA) positioning technology, an uplink time difference of arrival (uplink time difference of arrival, UL-TDOA) positioning technology, or another positioning technology, to obtain the location information of the first terminal. It should be noted that the location management function network element may alternatively determine the location information of the first terminal by using another positioning technology. This is not specifically limited in this application.

Optionally, the configuration information may include timing advance information. The timing advance information may indicate an interval between a time domain resource on which the at least one reference signal is actually sent and a time domain resource that is of the at least one reference signal and that is indicated by the configuration information. The first terminal may send the at least one reference signal based on the timing advance information and the configuration information. For example, the first terminal may send the at least one reference signal on the corresponding time-frequency resource based on the timing advance information and the time-frequency resource that is of the at least one reference signal and that is indicated by the configuration information.

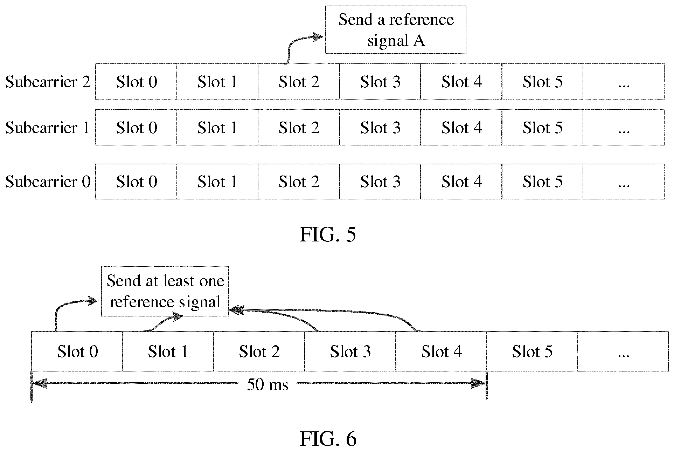

For example, with reference to FIG. 5, if the timing advance information indicates that a timing advance value is two slots, the configuration information indicates that a time domain resource of a reference signal A is a slot 4, and a frequency domain resource is a subcarrier 2, the first terminal may send the reference signal A in a slot 2 and on the subcarrier 2.

In an example, the base station may broadcast the configuration information, and the first terminal may receive the configuration information broadcast by the base station. For example, the base station may broadcast the configuration information on a physical broadcast channel (physical broadcast channel, PBCH). Alternatively, the base station may send a broadcast message, where the broadcast message includes the configuration information, and the broadcast message may be sent on a PBCH.

In another example, the base station may send the configuration information to the first terminal. For example, the base station may send the configuration information to the first terminal in a random access procedure of the first terminal. For example, the first terminal may access a network by using a two-step random access procedure, and the base station may send the configuration information to the first terminal by using a second message (message B, msg B) in two-step random access. For another example, the first terminal may access a network by using a four-step random access procedure, and the base station may send the configuration information to the first terminal by using a second message (message 2, msg 2) in the four-step random access procedure, or the base station may send the configuration information to the first terminal by using a fourth message (message 4, msg 4) in the four-step random access procedure.

In the foregoing solution, the base station may send the configuration information to the first terminal, to locate the first terminal. In addition, compared with a technical solution in which the base station broadcasts the configuration information, the technical solution in which the configuration information is sent to the first terminal in the random access procedure may enable the first terminal to determine that the configuration information is sent to the first terminal, to reduce information ambiguity, for example, to avoid a case in which if a plurality of terminal devices send reference signals based on the same configuration information after receiving the broadcast information, a resource conflict is caused, and to improve data transmission security.

In still another example, the base station may send the configuration information to the first terminal through a relay device. The relay device may be a base station, for example, the network device 102 shown in FIG. 1, or the relay device may be a terminal or a part of a terminal, for example, the terminal device 101 shown in FIG. 1 or a part of the terminal device 101. In this embodiment of this application, the relay device may be in a one-to-one correspondence with the first terminal. For example, each first terminal may communicate with the base station through one relay device, and each relay device can be a relay device of only one first terminal. Alternatively, the relay device may not be in a one-to-one correspondence with the first terminal. For example, each relay device may become a relay device of a plurality of first terminals, and the plurality of first terminals may communicate with the base station through the same relay device.

It should be understood that one relay device and a plurality of first terminals may be considered as an integrated terminal, and a control body of the integrated terminal is separated from a transmission/receiving apparatus. The control body may implement a function of the relay device, and the transmission/receiving apparatus may implement a function of the first terminal.

In this embodiment of this application, an example in which the relay device is a terminal is used for description. For example, the relay device may be a second terminal. The base station may send the configuration information to the second terminal, and the second terminal may send the configuration information to the first terminal.

In this application, the base station may send information, for example, the configuration information, to the second terminal by using an RRC message or a broadcast message, and the second terminal may send the information to the first terminal by using a sidelink (sidelink) message or a short-range communication message (for example, Bluetooth, Wi-Fi, or a WLAN). Similarly, the first terminal may send information to the second terminal by using a sidelink message or a short-range communication message, and the second terminal may send the information to the base station by using an RRC message. Optionally, the location management function network element may replace a function of the base station. For example, the location management function network element may send information, for example, the configuration information, to the second terminal. Similarly, the second terminal may send information, for example, the measurement result of the reference signal, received from the first terminal to the location management function network element.

It should be noted that in a possible case, the second terminal may forward information, for example, the configuration information, sent by the base station to the second terminal to the first terminal. In another possible case, the base station may send information to the second terminal, and the second terminal may perform corresponding processing on the information and send the information to the first terminal. For example, the base station may send the configuration information to the second terminal, the second terminal may perform processing, for example, filtering, integration, or content addition, on one or more pieces of configuration information, and the second terminal may send processed configuration information to the first terminal. Sending of information by the first terminal to the base station through the second terminal is similar to this.

In the foregoing solution, the base station may send the configuration information to the first terminal through the second terminal. Because simplification of a function of the first terminal may result in simplification or missing of a security function, the foregoing manner can improve information transmission security. In addition, because the first terminal does not need to directly communicate with the network, complexity and signaling overheads of the first terminal can be further reduced, to reduce power consumption of the first terminal.

In a possible implementation, the first terminal sends first information. In an example, the first terminal may send the first information to the base station. The first terminal may send the first information to the base station in a random access procedure. For example, the first terminal may access the network by using the two-step random access procedure, and the first terminal may send the first information to the base station by using a first message (message A, msg A) in the two-step random access procedure. For another example, the first terminal may access the network by using the four-step random access procedure, and the first terminal may send the first information to the base station by using a first message (message 1, msg 1) in the four-step random access procedure, or the first terminal may send the first information to the base station by using a third message (message 2, msg 2) in the four-step random access procedure.

In another example, the first terminal may send the first information to the second terminal, and the second terminal sends the first information to the base station.

The first information may indicate that the first terminal is a positioning terminal, for example, may be identification information of the first terminal. The first information may be other information that can uniquely identify the first terminal, for example, a random number, a device delivery identifier, an international mobile equipment identity (international mobile equipment identity, IMEI), an international mobile subscriber identity (international mobile subscriber identity, IMSI), a serving-temporary mobile subscriber identity (serving-temporary mobile subscriber identity, S-TMSI), or a cell radio network temporary identifier (cell radio network temporary identifier, C-RNTI). This is not specifically limited in this application.

Optionally, the first information may be encrypted information. For example, the first terminal may encrypt the first information, and send the encrypted first information. An encryption method is not specifically limited in this embodiment of this application. For example, the first information may be encrypted by using an asymmetric encryption method.

In the foregoing solution, the first terminal may indicate, by using the first information, that the first terminal is a positioning terminal, so that the base station can configure a positioning reference signal for the first terminal.

In another possible implementation, the first terminal may send a sequence number. The sequence number may be authentication information of the first terminal. For example, the first terminal may send the sequence number to the base station, or the first terminal may send the sequence number to the second terminal. This may be implemented with reference to sending of the first information by the first terminal.

Optionally, the sequence number may be a random number. When sending the sequence number for the first time, the first terminal may send an initial sequence number. The base station may receive and store the initial sequence number. If the first terminal wants to send the sequence number again, the first terminal may update the initial sequence number according to a sequence number maintenance rule. The first terminal may send an updated initial sequence number. The base station may further update the initial sequence number according to the maintenance rule, and perform authentication on the first terminal after receiving the updated initial sequence number from the first terminal. If an updated initial sequence number obtained by the base station is consistent with the received updated initial sequence number, it is considered that the authentication succeeds. On the contrary, if an updated initial sequence number obtained by the base station is inconsistent with the received updated initial sequence number, it is considered that the authentication fails.

The sequence number maintenance rule may be indicated by the network, or may be predefined in a protocol. This is not specifically limited in this application.

For example, the initial sequence number sent by the first terminal for the first time is 0. The base station may store the initial sequence number. The preset rule may be that the initial sequence number is increased by i each time the sequence number is sent, where i may be a real number, for example, i=1, 2, 3, 4, .... An example in which i=1 is used below for description. When sending the sequence number for the second time, the first terminal may increase the initial sequence number 0 by 1, that is, the sequence number is 1. The base station may increase the initial sequence number by 1 according to the preset rule, that is, the sequence number is 1. After receiving the sequence number sent by the first terminal for the second time, the base station may perform authentication on the first terminal. If the sequence number sent by the first terminal for the second time is 1, it is considered that the authentication succeeds. If the sequence number sent by the first terminal for the second time is not 1, it may be considered that the authentication fails.

Based on the foregoing solution, simplification of a function or a protocol stack of the first terminal may result in simplification or missing of a security function, for example, missing of an identity authentication function of the network for a user. Therefore, the first terminal sends the sequence number to the base station, to implement a technical solution in which the base station performs authentication on the first terminal. In this way, while a basic modulation and coding function is ensured, a code amount and a data amount corresponding to the modulation and coding function in a PHY layer function can be reduced to a maximum extent, to reduce power consumption of the terminal device.

In still another possible implementation, the base station may send second information. For example, the base station may send the second information to the first terminal, or the base station may send the second information to the second terminal. This may be implemented with reference to sending of the configuration information by the base station.

The second information may indicate a serving base station of the first terminal. For example, the second information may be the first information, or the second information may be identification information, for example, base station identification information. Alternatively, the second information may be other identification information that can indicate the serving base station of the first terminal. This is not specifically limited in this application.

Based on the foregoing solution, simplification of a function or a protocol stack of the first terminal may result in simplification or missing of a security function, for example, missing of an identity authentication function of the network for a user. Therefore, the base station sends the second information to the first terminal, to implement a technical solution of indicating that the base station is a valid serving base station, so as to improve security of information exchange between the terminal and the network.

In this embodiment of this application, the configuration information may further include reference signal sending duration. The reference signal sending duration may be understood as duration of sending the at least one reference signal. With reference to FIG. 6, if the reference signal sending duration included in the configuration information is 50 ms, duration in which the first terminal sends the at least one reference signal may be 50 ms or not exceed 50 ms. If the period information of the at least one reference signal indicates that a period is one slot, the first terminal may send the at least one reference signal at an interval of one slot. It should be understood that the first terminal may send the at least one reference signal based on the time-frequency domain resource that is of the at least one reference signal and that is indicated by the configuration information. For example, based on a time domain resource location, a frequency domain resource location, and the period information that are of the at least one reference signal and that are indicated by the configuration information, the first terminal may send the at least one reference signal on the corresponding time-frequency domain resource based on the period indicated by the period information.

Based on the foregoing solution, simplification of a function or a protocol stack of the first terminal may result in a case in which the first terminal does not have a connected mode information transmission function, or may result in a case in which the terminal cannot maintain communication with the network, for example, the terminal cannot receive control information from the network, and consequently the terminal does not know when to start or stop transmission. Therefore, the technical solution of indicating the reference signal sending duration to the first terminal is used, to limit total duration in which the first terminal sends the reference signal, and further reduce power consumption of the terminal.

In this embodiment of this application, the first terminal may access the base station to communicate with the base station, or the first terminal may communicate with the base station through the second terminal. The following separately explains and describes the two communication manners by using the accompanying drawings.

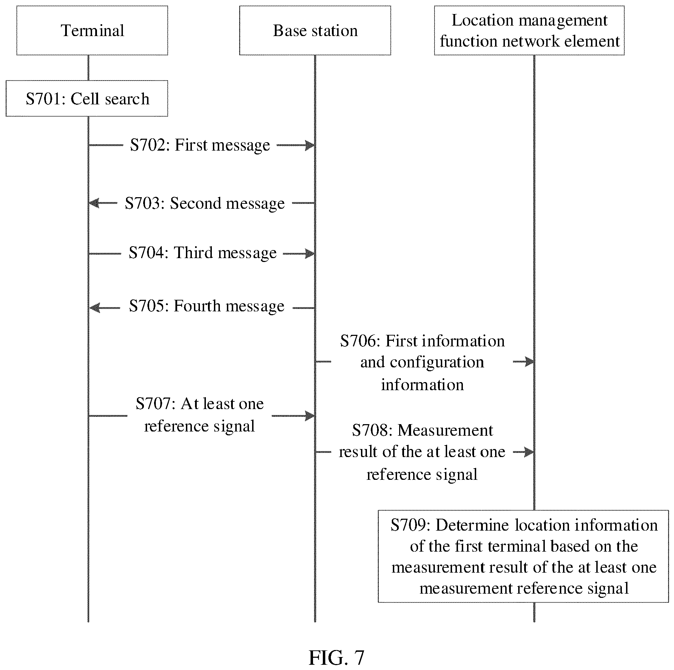

FIG. 7 is an example flowchart of a communication method according to an embodiment of this application. In the method, a terminal may be a terminal with a simplified function or a simplified protocol stack, and the terminal may perform an operation performed by the first terminal in the method embodiment shown in FIG. 4. The terminal may access a network to communicate with a base station. For example, the terminal may access the network by using a four-step random access procedure or a two-step random access procedure, to communicate with the base station. In the embodiment shown in FIG. 7, an example in which the terminal accesses the network by using the four-step random access procedure is used for description.

S701: Perform cell search.

The terminal may obtain downlink synchronization information by receiving a master information block (master information block, MIB), monitoring a physical downlink shared channel (physical downlink control channel, PDCCH), and receiving system information (system information block, SIB), for example, tracking reference signal (tracking reference signal, TRS) synchronization information and synchronization signal block (synchronization signal block, SSB) synchronization information. The terminal may perform downlink synchronization with the base station based on the obtained downlink synchronization information.

S702: The terminal sends a first message.

Correspondingly, the base station receives the first message.

The terminal may send a random access request on a physical random access channel (physical random access channel, PRACH), for example, may send the first message. The first message may include a preamble sequence (preamble).

S703: The base station sends a second message.

Correspondingly, the terminal receives the second message.

The second message may carry timing advance information and an uplink resource used to send a third message.

S704: The terminal sends the third message.

Correspondingly, the base station receives the third message.

For example, the terminal may send the third message on the corresponding uplink resource based on the timing advance information and the uplink resource in S703. In an example, the first message may carry first information. This example may be an implementation in which the first terminal sends the first information in the method embodiment shown in FIG. 4. In another example, the first message may further carry a sequence number. This example may be an implementation in which the first terminal sends the sequence number in the method embodiment shown in FIG. 4.

S705: The base station sends a fourth message.

Correspondingly, the terminal receives the fourth message.

The fourth message may include configuration information of at least one reference signal. S704 may be an implementation of S401. In an example, the fourth message may carry second information. This example may be an implementation in which the base station sends the second information in the method embodiment shown in FIG. 4.

S706: The base station sends the first information and the configuration information to a location management function network element.

In S706, the base station may send the first information received in S704 and the configuration information in S705 to the location management function network element. The base station may indicate, to the location management function network element, that the first information corresponds to the configuration information, that is, notify the location management function network element that the at least one reference signal indicated by the configuration information is configured for the terminal indicated by the first information.

The base station may send the first information and the configuration information to the location management function network element by using a new radio positioning protocol (new radio positioning protocol annex, NRPPa) message.

S707: The terminal sends the at least one reference signal.

For example, the terminal may send the at least one reference signal based on the configuration information. S707 may be an implementation of S402. Further, the terminal may send the at least one reference signal based on the configuration information and the timing advance information.

Optionally, the configuration information in S705 may include reference signal sending duration. Total duration in which the terminal sends the at least one reference signal may not exceed the reference signal sending duration. This may be implemented with reference to the related descriptions in the method embodiment shown in FIG. 4.

S708: The base station sends a measurement result of the at least one reference signal to the location management function network element.

S709: The location management function network element determines location information of the first terminal based on the measurement result of the at least one measurement reference signal.

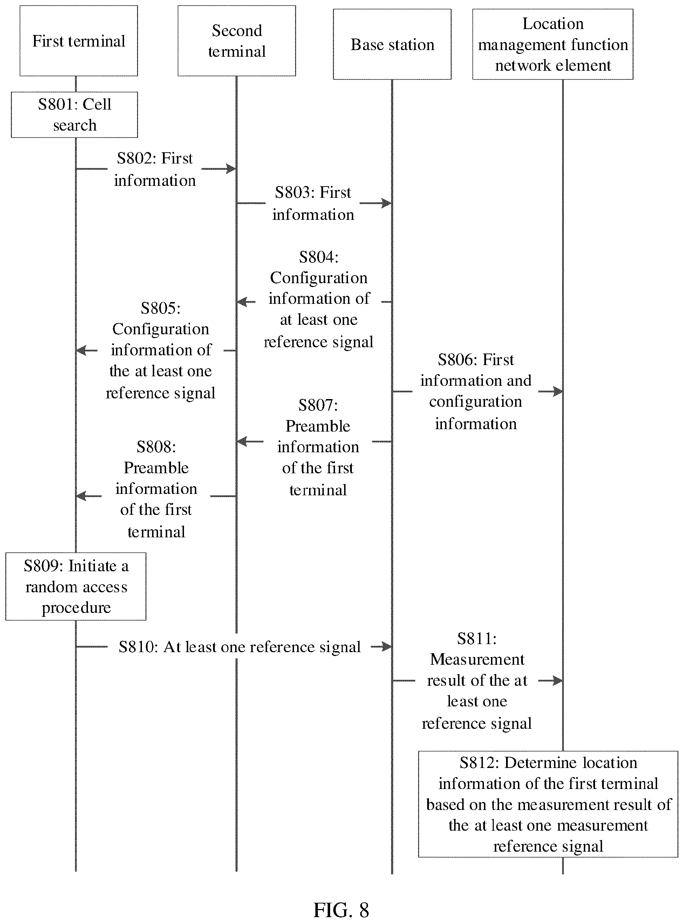

FIG. 8 is an example flowchart of a communication method according to an embodiment of this application. In the method, a first terminal may be a terminal with a simplified function or a simplified protocol stack. The first terminal does not need to directly send and receive a unicast message to and from a base station, does not need to initiate a complete random access procedure, and may exchange information with a network through a relay device.

In the embodiment shown in FIG. 8, an example in which the relay device is a terminal, for example, a second terminal, is used for description.

S801: Perform cell search.

The terminal may obtain downlink synchronization information by receiving a MIB and monitoring a PDCCH, for example, TRS synchronization information and SSB synchronization information.

It should be noted that in the embodiment shown in FIG. 8, because the first terminal communicates with the base station through the second terminal, in a possible implementation, the first terminal does not need to receive a SIB in the embodiment shown in FIG. 8.

S802: The first terminal sends first information to the second terminal.

Correspondingly, the second terminal receives the first information.

S803: The second terminal sends the first information to the base station.

Correspondingly, the base station receives the first information.

S802 and S803 may be an implementation in which the first terminal sends the first information in the method embodiment shown in FIG. 4.

In an example, the first terminal may further send a sequence number to the second terminal, and the second terminal may send the sequence number to the base station. This example may be implemented with reference to S802 and S803. This example may be an implementation in which the first terminal sends the sequence number in the method embodiment shown in FIG. 4.

In another example, different from S702, the first terminal may not need to send the sequence number to the second terminal, because the second terminal has a complete protocol stack function or a security function.

S804: The base station sends configuration information of at least one reference signal to the second terminal.

Correspondingly, the second terminal receives the configuration information of the at least one reference signal.

S805: The second terminal sends the configuration information of the at least one reference signal to the first terminal.

Correspondingly, the first terminal receives the configuration information of the at least one reference signal.

S804 and S 805 may be an implementation of S401.

In an example, the base station may send second information to the second terminal, and the second terminal may send the second information to the first terminal. This example may be implemented with reference to S804 and S805. This example may be an implementation in which the base station sends the second information in the method embodiment shown in FIG. 4.

S806: The base station sends the first information and the configuration information to a location management function network element.

S806 may be implemented with reference to S706.

S807: The base station sends preamble information of the first terminal to the second terminal.

Correspondingly, the second terminal receives the preamble information of the first terminal.

S808: The second terminal sends the preamble information to the first terminal.

Correspondingly, the first terminal receives the preamble information.

S807 and S808 may be a specific implementation in which the first terminal obtains the preamble information.

S809: The first terminal initiates a random access procedure by using the preamble information.

For example, the terminal may send a random access request, for example, a msg 1, to the base station. The random access request may carry the preamble information.

It should be noted that different from the embodiment shown in FIG. 7, in the embodiment shown in FIG. 8, the first terminal does not need to initiate a complete random access procedure, and the first terminal needs to obtain only timing advance information. For example, the first terminal may not perform S703 and S704.

S810: The terminal sends the at least one reference signal.

S810 may be implemented with reference to S706, and S810 may be an implementation of S402.

In another implementation, the second terminal may further measure the at least one reference signal, and send a measurement result of the at least one reference signal to the base station or the LMF. The second terminal may measure the at least one reference signal with reference to measurement of the at least one reference signal by the base station.

S811 and S812 may be implemented with reference to S708 and S709.

It should be noted that for brief description, the foregoing method embodiments are described as a series of action combinations. However, a person skilled in the art should understand that embodiments of this application are not limited to the described action sequences, because according to embodiments of this application, some steps may be performed in another sequence or simultaneously performed. In addition, a person skilled in the art should also understand that all embodiments described in this specification are preferred embodiments, and the related actions and modules are not necessarily required in embodiments of this application.

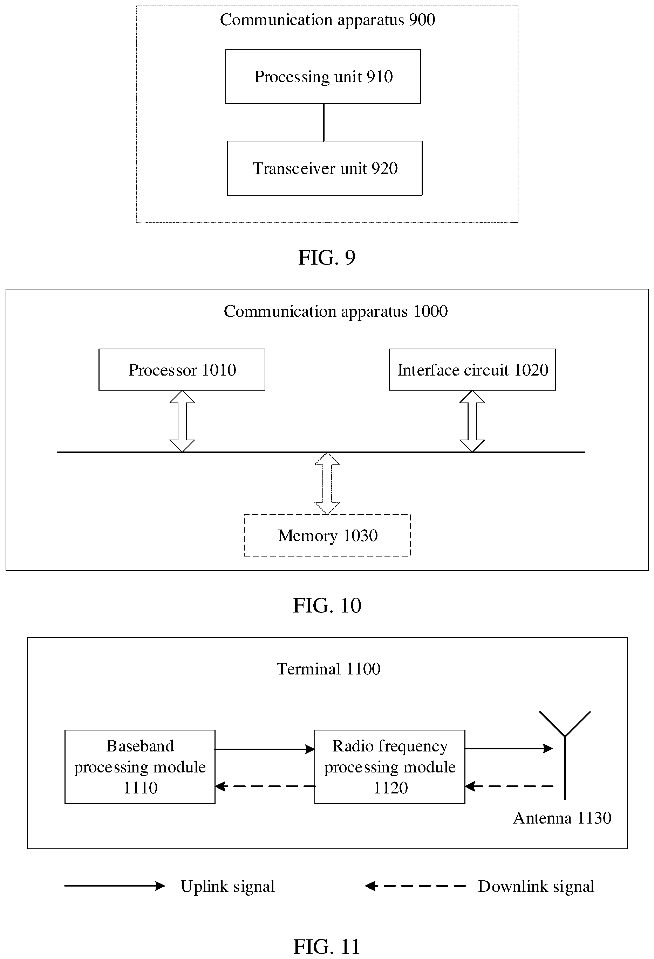

As shown in FIG. 9, a communication apparatus 900 includes a processing unit 910 and a transceiver unit 920. The communication apparatus 900 is configured to implement functions of the first terminal, the second terminal, and the base station in the method embodiments shown in FIG. 4 to FIG. 8.

When the communication apparatus 900 is configured to implement the function of the first terminal, the transceiver unit 920 is configured to receive configuration information of at least one reference signal; the processing unit 910 is configured to generate the at least one reference signal; and the transceiver unit 920 is further configured to send the at least one reference signal based on the configuration information. The communication apparatus 900 is not configured to receive or send at least one of the following: a non-access stratum NAS message, a transmission long term evolution positioning protocol LPP message, connected mode data, and a paging message.

In a design, the communication apparatus 900 does not have at least one of the following: a NAS layer function, an LPP layer function, a function of sending information in a connected mode, a function of receiving information in the connected mode, a PDCP layer function, and an RLC layer function.

In a design, the communication apparatus 900 has only at least one of the following: a PHY layer function, an RRC layer function, and a MAC layer function.

In a design, the PHY layer function does not include at least one of the following: a closed-loop power control function and a multi-antenna mapping function.

In a design, the MAC layer function does not include at least one of the following: a function of multiplexing and demultiplexing a MAC layer protocol data unit, a scheduling information reporting function, a function of indicating an error by using a HARQ, a priority processing function, and a padding function.

In a design, the RRC layer function does not include at least one of the following: a paging message receiving function, a function of establishing, maintaining, or releasing an RRC connection to a network, a function of establishing, configuring, maintaining, or releasing a signaling radio bearer, a QoS management function, a function of detecting and rectifying a radio link failure, a function of transmitting a NAS message from a NAS layer to the first terminal device, and a function of transmitting a NAS message from the first terminal device to the NAS layer.

In a design, a modulation and coding function in the PHY layer function includes only one of the following: QPSK modulation, binary BPSK modulation, π/2-BPSK modulation, 16QAM modulation, 64QAM modulation, and 256QAM modulation.

In a design, the MAC layer function supports only a single HARQ process.

In a design, the RRC layer function includes only at least one of the following: a function of receiving broadcast system information, a function of establishing, configuring, maintaining, or releasing a data radio bearer, a function of sending or receiving a measurement configuration, a function of sending or receiving a measurement report, and a function of controlling measurement report reporting.

In a design, the communication apparatus 900 does not have a user plane function.

In a design, the at least one reference signal is used for positioning.

In a design, the transceiver unit 920 is further configured to send first information, where the first information indicates that the first terminal device is a positioning terminal.

In a design, the transceiver unit 920 is further configured to send a sequence number, where the sequence number is authentication information of the first terminal device.

In a design, the transceiver unit 920 is further configured to receive timing advance information; and the transceiver unit 920 is specifically configured to send the at least one reference signal based on the configuration information and the timing advance information.

In a design, the transceiver unit 920 is further configured to receive second information, where the second information indicates a serving network device of the first terminal device.

In a design, the first information is information carried in a first message in a step random access procedure or a third message in a four-step random access procedure, or the first information is information carried in a first message in a two-step random access procedure.

In a design, the transceiver unit 920 is further configured to: receive the configuration information that is of the at least one reference signal and that is sent by a second terminal device; or receive the configuration information that is of the at least one reference signal and that is sent by a network device.

In a design, the configuration information of the at least one reference signal is information carried in a second message in the four-step random access procedure or a fourth message in the four-step random access procedure, or the configuration information of the at least one reference signal is information carried in a second message in the two-step random access procedure.

When the communication apparatus 900 is configured to implement the function of the second terminal, the transceiver unit 920 is configured to receive configuration information that is of at least one reference signal and that is sent by a network device; the processing unit 910 is configured to determine a first terminal device corresponding to the configuration information of the at least one reference signal; and the transceiver unit 920 is further configured to send the configuration information to the determined first terminal device, where the first terminal device is not configured to receive or send at least one of the following: a NAS message, an LPP message, connected mode information, and a paging message.

In a design, the transceiver unit 920 is further configured to: receive first information sent by the first terminal device, where the first information indicates that the first terminal device is a positioning terminal; and send the first information to the network device.

In a design, the transceiver unit 920 is further configured to: receive second information sent by the network device, where the second information indicates a serving network device of the first terminal device; and send the second information to the first terminal device.

In a design, the transceiver unit 920 is further configured to: receive a sequence number sent by the first terminal device, where the sequence number is authentication information of the first terminal device; and send the sequence number to the network device.

When the communication apparatus 900 is configured to implement the function of the base station, the transceiver unit 920 is configured to receive first information, where the first information indicates that a first terminal device is a positioning terminal; the processing unit 910 is configured to generate configuration information of at least one reference signal; and the transceiver unit 920 is further configured to send the configuration information of the at least one reference signal, where the first terminal device is not configured to receive or send at least one of the following: a NAS message, an LPP message, connected mode information, and a paging message.

In a design, the transceiver unit 920 is further configured to receive a sequence number, where the sequence number is authentication information of the first terminal device.

In a design, the transceiver unit 920 is further configured to send timing advance information, where the timing advance information indicates an advance time for the first terminal device to send the at least one reference signal.

In a design, the transceiver unit 920 is further configured to send second information, where the second information indicates a serving network device of the first terminal device.

In a design, the transceiver unit 920 is further configured to: receive the first information sent by the first terminal device; or receive the first information sent by a second terminal device.

In a design, the transceiver unit 920 is further configured to: send the configuration information of the at least one reference signal to the first terminal device; or send the configuration information of the at least one reference signal to the second terminal device.

In a design, the first information is information carried in a first message in a step random access procedure or a third message in a four-step random access procedure, or the first information is information carried in a first message in a two-step random access procedure. In a design, the configuration information of the at least one reference signal is information carried in a second message in the four-step random access procedure or a fourth message in the four-step random access procedure, or the configuration information of the at least one reference signal is information carried in a second message in the two-step random access procedure.

In a design, the configuration information includes duration of the at least one reference signal; and duration in which the transceiver unit 920 receives the at least one reference signal does not exceed the duration.

For more detailed descriptions of the processing unit 910 and the transceiver unit 920, directly refer to the related descriptions in the method embodiments shown in FIG. 4 to FIG. 8. Details are not described herein.

As shown in FIG. 10, a communication apparatus 1000 includes a processor 1010 and an interface circuit 1020. The processor 1010 and the interface circuit 1020 are coupled to each other. It may be understood that the interface circuit 1020 may be a transceiver or an input/output interface. Optionally, the communication apparatus 1000 may further include a memory 1030, configured to store instructions to be executed by the processor 1010, store input data required by the processor 1010 to run instructions, or store data generated after the processor 1010 runs instructions.

When the communication apparatus 1000 is configured to implement the method shown in FIG. 4 to FIG. 8, the processor 1010 is configured to implement a function of the processing unit 910, and the interface circuit 1020 is configured to implement a function of the transceiver unit 920.

When the communication apparatus is a chip used in a terminal, the chip in the terminal implements a function of the first terminal or the second terminal in the foregoing method embodiments. The chip in the terminal receives information from another module (for example, a radio frequency module or an antenna) in the terminal, where the information is sent by a base station to the terminal; or the chip in the terminal sends information to another module (for example, a radio frequency module or an antenna) in the terminal, where the information is sent by the terminal to a base station.

When the communication apparatus is a module used in a base station, the module in the base station implements a function of the base station in the foregoing method embodiments. The module in the base station receives information from another module (for example, a radio frequency module or an antenna) in the base station, where the information is sent by a terminal to the base station; or the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

FIG. 11 is a diagram of a structure of a terminal according to an embodiment of this application. The terminal 1100 includes a baseband processing module 1110, a radio frequency processing module 1120, and an antenna 1130. The baseband processing module 1110 is configured to process a baseband signal, which may specifically include demodulating and decoding a downlink signal and encoding and modulating an uplink signal. The baseband processing module 1110 may be specifically a baseband chip. The radio frequency processing module 1120 is configured to process a radio frequency signal, which may specifically include performing analog domain filtering on an uplink/downlink signal and performing power amplification on the uplink/downlink signal. That is, the radio frequency processing module 1120 includes the analog domain filter described in the foregoing method embodiments. The radio frequency processing module 1120 may be specifically a radio frequency chip. The antenna 1130 is configured to: receive a radio wave from space, convert the radio wave into a downlink signal, and send the downlink signal to the radio frequency processing module 1120, or convert an uplink signal from the radio frequency processing module 1120 into a radio wave, and transmit the radio wave to space.

It may be understood that the processor in this embodiment of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

This application further provides a computer-readable storage medium. The computer-readable storage medium stores a computer program or instructions. When the computer program or the instructions are run, the method performed by the network device or the terminal device in the foregoing method embodiments is implemented. In this way, the function in the foregoing embodiments may be implemented in a form of a software functional unit and sold or used as an independent product. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The storage medium includes any medium that can store program code, for example, a USB flash drive, a removable hard disk, a read-only memory ROM, a random access memory RAM, a magnetic disk, or an optical disc.

This application further provides a computer program product. The computer program product includes computer program code. When the computer program code is run on a computer, the computer is enabled to perform the method performed by the terminal device or the network device in any one of the foregoing method embodiments.

This application further provides a system. The system includes the first terminal device and the network device described above. Alternatively, the system includes the first terminal device, the second terminal device, and the network device described above.

An embodiment of this application further provides a processing apparatus, including a processor and an interface. The processor is configured to perform the method performed by the terminal device or the network device in any one of the foregoing method embodiments.

The method steps in embodiments of this application may be implemented by hardware, or may be implemented by a processor by executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, the storage medium is coupled to the processor, so that the processor can read information from the storage medium and write information into the storage medium. Certainly, the storage medium may be a component of the processor. The processor and the storage medium may be located in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used for implementation, all or some of the foregoing embodiments may be implemented in a form of a computer program product. The computer program product includes one or more computer programs or instructions. When the computer programs or the instructions are loaded and executed on a computer, all or some of the procedures or functions in embodiments of this application are performed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, into which one or more usable media are integrated. The usable medium may be a magnetic medium, for example, a floppy disk, a hard disk, or a magnetic tape; may be an optical medium, for example, a digital video disc; or may be a semiconductor medium, for example, a solid state drive. The computer-readable storage medium may be a volatile or nonvolatile storage medium, or may include two types of storage media: a volatile storage medium and a nonvolatile storage medium.

In various embodiments of this application, unless otherwise stated or there is a logic conflict, terms and/or descriptions in different embodiments are consistent and may be mutually referenced, and technical features in the different embodiments may be combined based on an internal logical relationship between the technical features, to form a new embodiment.

In this application, "at least one" means one or more, and "a plurality of" means two or more. "And/Or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" usually indicates an "or" relationship between associated objects. In a formula in this application, the character "/" indicates a "division" relationship between associated objects. "Including at least one of A, B, and C" may represent: including A; including B; including C; including A and B; including A and C; including B and C; and including A, B, and C.

It should be further understood that in this application, both "when ..." and "if" mean that a network element performs corresponding processing in an objective situation, are not intended to limit time, do not require the network element to necessarily have a determining action during implementation, and do not mean another limitation.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. A communication method, comprising:
receiving, by a first terminal device, configuration information of at least one reference signal; and
sending, by the first terminal device, the at least one reference signal based on the configuration information, wherein
the first terminal device does not receive or send at least one of the following: a non-access stratum NAS message, a transmission long term evolution positioning protocol LPP message, connected mode information, and a paging message.

2. The method according to claim 1, wherein the first terminal device does not have at least one of the following functions: a NAS layer function, an LPP layer function, a function of sending information in a connected mode, a function of receiving information in the connected mode, a packet data convergence protocol PDCP layer function, and a radio link control RLC layer function.

3. The method according to claim 1 or 2, wherein the first terminal device has only at least one of the following functions:
a physical PHY layer function, a radio access and control RRC layer function, and a medium access control MAC layer function.

4. The method according to claim 3, wherein the RRC layer function does not comprise at least one of the following: a paging message receiving function, a function of establishing, maintaining, or releasing an RRC connection to a network, a function of establishing, configuring, maintaining, or releasing a signaling radio bearer, a quality of service QoS management function, a function of detecting and rectifying a radio link failure, a function of transmitting a NAS message from a NAS layer to the first terminal device, and a function of transmitting a NAS message from the first terminal device to the NAS layer.

5. The method according to claim 3 or 4, wherein the MAC layer function does not comprise at least one of the following: a function of multiplexing and demultiplexing a MAC layer protocol data unit, a scheduling information reporting function, a function of indicating an error by using a hybrid automatic repeat request HARQ, a priority processing function, and a padding function.

6. The method according to any one of claims 3 to 5, wherein the PHY layer function does not comprise at least one of the following: a closed-loop power control function and a multi-antenna mapping function.

7. The method according to any one of claims 3 to 6, wherein the RRC layer function comprises only at least one of the following: a function of receiving broadcast system information, a function of establishing, configuring, maintaining, or releasing a data radio bearer, a function of sending or receiving a measurement report, and a function of controlling measurement report reporting.

8. The method according to any one of claims 3 to 7, wherein the MAC layer function comprises only a single hybrid automatic repeat request HARQ process.

9. The method according to any one of claims 3 to 8, wherein a modulation and coding function in the PHY layer function comprises only one of the following: quadrature phase shift keying QPSK modulation, binary phase shift keying BPSK modulation, π/2-BPSK modulation, quadrature amplitude modulation 16QAM comprising 16 symbols, quadrature amplitude modulation 64QAM comprising 64 symbols, and quadrature amplitude modulation 256QAM comprising 256 symbols.

10. The method according to any one of claims 1 to 9, wherein the first terminal device does not have a user plane function.

11. The method according to any one of claims 1 to 10, wherein the at least one reference signal is used for positioning.

12. The method according to any one of claims 1 to 11, further comprising:
sending, by the first terminal device, first information, wherein the first information indicates that the first terminal device is a positioning terminal.

13. The method according to any one of claims 1 to 12, further comprising:
sending, by the first terminal device, a sequence number, wherein the sequence number is authentication information of the first terminal device.

14. The method according to any one of claims 1 to 13, further comprising:
receiving, by the first terminal device, timing advance information, wherein
the sending, by the first terminal device, the at least one reference signal based on the configuration information comprises:
sending, by the first terminal device, the at least one reference signal based on the configuration information and the timing advance information.

15. The method according to any one of claims 1 to 14, further comprising:
receiving, by the first terminal device, second information, wherein the second information indicates a serving network device of the first terminal device.

16. The method according to claim 12, wherein the first information is information carried in a first message or a third message in a four-step random access procedure, or the first information is information carried in a first message in a two-step random access procedure.

17. The method according to any one of claims 1 to 16, wherein the receiving, by a first terminal device, configuration information of the at least one reference signal comprises:
receiving, by the first terminal device, the configuration information that is of the at least one reference signal and that is sent by a second terminal device; or
receiving, by the first terminal device, the configuration information that is of the at least one reference signal and that is sent by a network device.

18. The method according to claim 17, wherein the configuration information of the at least one reference signal is information carried in a second message or a fourth message in the four-step random access procedure, or the configuration information of the at least one reference signal is information carried in a second message in the two-step random access procedure.

19. The method according to any one of claims 1 to 18, wherein
the configuration information comprises duration of the at least one reference signal; and
duration in which the first terminal device sends the at least one reference signal does not exceed the duration.

20. A communication method, comprising:
receiving, by a network device, first information, wherein the first information indicates that a first terminal device is a positioning terminal; and
sending, by the network device, configuration information of at least one reference signal, wherein
the first terminal device is not configured to receive or send at least one of the following: a NAS message, an LPP message, connected mode information, and a paging message.

21. The method according to claim 20, further comprising:
receiving, by the network device, a sequence number, wherein the sequence number is authentication information of the first terminal device.

22. The method according to claim 20 or 21, further comprising:
sending, by the network device, timing advance information, wherein the timing advance information indicates an advance time for the first terminal device to send the at least one reference signal.

23. The method according to any one of claims 20 to 22, further comprising:
sending, by the network device, second information, wherein the second information indicates a serving network device of the first terminal device.

24. The method according to any one of claims 20 to 23, wherein the receiving, by a network device, first information comprises:
receiving, by the network device, the first information sent by the first terminal device; or
receiving, by the network device, the first information sent by a second terminal device.

25. The method according to any one of claims 20 to 24, wherein the sending, by the network device, configuration information of at least one reference signal comprises:
sending, by the network device, the configuration information of the at least one reference signal to the first terminal device; or
sending, by the network device, the configuration information of the at least one reference signal to the second terminal device.

26. The method according to claim 24, wherein the first information is information carried in a first message or a third message in a four-step random access procedure, or the first information is information carried in a first message in a two-step random access procedure.

27. The method according to claim 26, wherein the configuration information of the at least one reference signal is information carried in a second message or a fourth message in the four-step random access procedure, or the configuration information of the at least one reference signal is information carried in a second message in the two-step random access procedure.

28. The method according to any one of claims 20 to 27, wherein the configuration information comprises duration of the at least one reference signal; and
duration in which the network device receives the at least one reference signal does not exceed the duration.

29. A communication method, comprising:
receiving, by a second terminal device, configuration information that is of at least one reference signal and that is sent by a network device; and
sending, by the second terminal device, the configuration information to a first terminal device, wherein
the first terminal device is not configured to receive or send at least one of the following: a NAS message, an LPP message, connected mode information, and a paging message.

30. The method according to claim 29, further comprising:
receiving, by the second terminal device, first information sent by the first terminal device, wherein the first information indicates that the first terminal device is a positioning terminal; and
sending, by the second terminal device, the first information to the network device.

31. The method according to claim 29 or 30, further comprising:
receiving, by the second terminal device, second information sent by the network device, wherein the second information indicates a serving network device of the first terminal device; and
sending, by the second terminal device, the second information to the first terminal device.

32. The method according to any one of claims 29 to 31, further comprising:
receiving, by the second terminal device, a sequence number sent by the first terminal device, wherein the sequence number is authentication information of the first terminal device; and
sending, by the second terminal device, the sequence number to the network device.

33. A communication apparatus, comprising a module configured to perform the method according to any one of claims 1 to 19, comprising a module configured to perform the method according to any one of claims 20 to 28, or comprising a module configured to perform the method according to any one of claims 29 to 32.

34. A communication apparatus, wherein the communication apparatus comprises a processor and a memory, the memory is configured to store a computer program or instructions, and the processor is configured to execute the computer program or the instructions in the memory, to perform the method according to any one of claims 1 to 19, the method according to any one of claims 20 to 28, or the method according to any one of claims 29 to 32.

35. A computer-readable storage medium, wherein the storage medium stores a computer program or instructions, and when the computer program or the instructions are executed by a communication apparatus, the method according to any one of claims 1 to 19, the method according to any one of claims 20 to 28, or the method according to any one of claims 29 to 32 is implemented.

36. A computer program product, wherein the computer program product comprises computer program code, and when the computer program code is run by a computer, the computer is enabled to perform the method according to any one of claims 1 to 19, the method according to any one of claims 20 to 28, or the method according to any one of claims 29 to 32.
